Europäisches Patentamt

European Patent Office

Office européen des brevets

(11) Publication number: **0 314 638**
**A2**

## (12) EUROPEAN PATENT APPLICATION

(21) Application number: **88830436.7**

(22) Date of filing: **25.10.88**

(51) Int. Cl.⁴: **B 60 T 11/18**
**B 60 T 11/20**

(30) Priority: **26.10.87 IT 5375387**

(43) Date of publication of application:
**03.05.89 Bulletin 89/18**

(84) Designated Contracting States:
**AT CH DE ES FR GB LI**

(71) Applicant: **SAME S.p.A.**
**Viale F. Cassani, 14**
**I-24047 Treviglio Bergamo (IT)**

(72) Inventor: **Bisleri, Secondo c/o SAME S.p.A.**
**Viale F. Cassani, 14**
**I-24047 Treviglio (Bergamo) (IT)**

(74) Representative: **Buzzi, Franco et al**
**c/o Jacobacci-Casetta & Perani S.p.A. Via Alfieri, 17**
**I-10121 Torino (IT)**

(54) A pedal-operated hydraulic circuit for tractors with a reversible driving position.

㊼ A hydraulic operating circuit for tractors with a reversible driving position includes a front pedal (4) and a rear pedal (5) which can be operated selectively to operate at least one driven member (11, 12). A one-way valve (13) is inserted between the front pedal (4) and the rear pedal (5) for interrupting communication between the pedal which is not used and the driven member automatically when the pedal which is being used is first operated.

**Description**

**A pedal-operated hydraulic circuit for tractors with a reversible driving position**

The present invention relates generally to tractors with reversible driving positions, that is, of the type in which it is possible to change from one driving position for normal travel to a reverse driving position simply by rotating the seat and moving the steering wheel.

More particularly, the invention concerns a pedal-operated hydraulic circuit for such tractors, including a front pedal and a rear pedal which can be operated selectively to actuate at least one driven member by means of the pressurising of hydraulic fluid in a line interconnecting the front and rear pedals and the driven member.

Similar hydraulic circuits are used to control the braking of the tractor wheels (in this case, two circuits are provided in parallel with two pairs of front and rear pedals for operating the front brakes and the rear brakes, right and left respectively) or for engaging and disengaging the friction clutch.

In both cases, for safety reasons, whenever a change is made from the normal driving position to the reverse position and vice versa, it is first necessary to prevent the operation of the or each pedal which is not to be used anymore and to enable the operation of the pedals intended to be used in the new position. Normally, manually-operated valves or deflectors are provided for this purpose and involve the risk, in the case of forgetfulness by the tractor driver, of compromising its safety in operation.

The object of the present invention is to avoid this disadvantage and provide a hydraulic operating circuit of the type defined above, in which the switching corresponding to prevention-enabling of the operating pedals is achieved automatically, manual operation being prevented.

According to the invention, this object is achieved by virtue of the fact that the switching valve means for preventing communication between the pedal which is not being used and the driven member are constituted by a double one-way valve arranged to interrupt communication between the pedal which is not being used and the driven member automatically when the pedal being used is first operated.

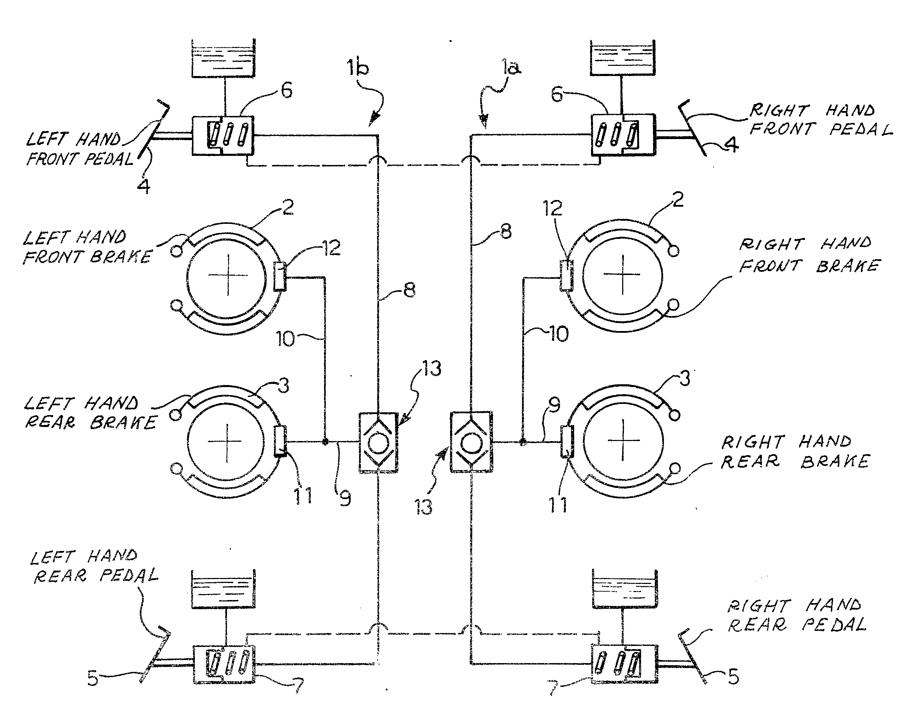

The invention will now be described in detail with reference to the appended drawing, provided purely by way of non-limiting example, which shows schematically the application of the invention to a hydraulic braking circuit of a tractor with a reversible driving position.

With reference to the drawing, two identical circuits, indicated 1a, 1b, are arranged in generally known manner to operate the front brakes 2 and the rear brakes 3 for the right-hand wheels and the left-hand wheels, respectively, of a tractor with a reversible driving position.

Each circuit 1a, 1b includes a front pedal 4 and a rear pedal 5 each of which operates a piston pump 6, 7 to pressurise hydraulic fluid contained in a line 8 interconnecting the pumps 6, 7.

Each line 8 is connected through respective ducts 9, 10 to the hydraulic actuators 11, 12 for the respective brakes 2, 3.

According to the invention, a double one-way valve, schematically indicated 13, is inserted in the connection between the line 8 and the ducts 9, 10 and includes an obturator which is able to interrupt communication between the ducts 9 and 10 and the front pump 6 while maintaining communication between the ducts 9, 10 and the rear pump 7, or vice versa.

In practice, the double one-way valve 13 functions as an automatic switching valve to eliminate the need for manual intervention to prevent one of the pedals 4, 5 from being operated when the other of these pedals is operated. Thus, following a change from the normal driving position to the reverse position or vice versa, the accidental operation of the pedals 4 or 5 not being used in the new driving position is prevented without the need for direct intervention by the driver and hence in a practical, functional and safe manner. The dimensioning of the valve 13 is such that, when one of the two pedals is actuated for the first time, the switching and simultaneous activation of the function connected to this pedal is achieved.

**Claims**

1. A pedal-operated hydraulic circuit for tractors with a reversible driving position, including a front pedal and a rear pedal which can be operated selectively to actuate at least one driven member through the pressurising of hydraulic fluid in a line interconnecting the front and rear pedals and the driven member, and switching valve means associated with the line for interrupting communication between the pedal which is not being used and the driven member, characterised in that the switching valve means are constituted by a double one-way valve (13) arranged to interrupt communication between the pedal (4, 6; 5,7) which is not being used and the driven member (2, 3) automatically when the pedal (5, 7; 4, 6) being used is first operated.